# EUROPÄISCHE PATENTSCHRIFT

(11) **EP 1 549 682 B1**
(45) Veröffentlichungstag und Bekanntmachung des Hinweises auf die Patenterteilung: **07.12.2005**
(21) Anmeldenummer: 03766208.7
(22) Anmeldetag: 17.07.2003
(51) Int. Cl.: C08F 2/38

(54) **SILAN-HALTIGE POLYMERISATE**
POLYMERS CONTAINING SILANE
POLYMERES CONTENANT DES SILANES

(30) Priorität: 25.07.2002 DE 10233936
(43) Veröffentlichungstag der Anmeldung: 06.07.2005
(73) Patentinhaber: Wacker Polymer Systems GmbH & Co. KG, 84489 Burghausen (DE)
(72) Erfinder: BACHER, Andreas, 84489 Burghausen (DE); STARK, Kurt, 84508 Burgkirchen (DE)
(74) Vertreter: Schuderer, Michael
(86) Internationale Anmeldenummer: PCT/EP2003/007791
(87) Internationale Veröffentlichungsnummer: WO 2004/013187

(56) Entgegenhaltungen:
- EP-A- 0 217 178
- EP-A- 0 656 370

## Beschreibung

Die Erfindung betrifft Silan-haltige Polymerisate, Verfahren zur Herstellung von Silan-haltigen Polymerisaten in Gegenwart von silanhaltigen Molekulargewichtsreglern, sowie deren Verwendung.

Aus dem Stand der Technik sind eine Reihe von Verfahren zur Herstellung von silanhaltigen Polymeren bekannt. Die Herstellung kann beispielsweise mittels polymeranaloger Umsetzung von funktionellen Polymeren mit Silylierungsmitteln erfolgen. In der US-A 5,036,137 wird beispielsweise die Herstellung von silyliertem Polyvinylalkohol beschrieben, wobei Polyvinylalkohol mit 3-Glycidoxypropyltrimethoxysilan oder Vinyltrimethoxysilan umgesetzt wird. Aus der EP-A 581576 ist bekannt, OH-funktionelle Polymere wie Polyvinylalkohol mit Alkylorthosilikaten oder Alkyltrialkoxysilanen umzusetzen.

Silanhaltige Polymere können auch mittels Copolymerisation von silanfunktionellen, ethylenisch ungesättigten Monomeren hergestellt werden. Die GB-A 1407827 beschreibt die Herstellung von Vinyl-Silanol-Copolymer-Dispersionen mittels Copolymerisation von Vinyltrialkoxysilanen mit ethylenisch ungesättigten Comonomeren. Die EP-A 123927 betrifft silylmodifizierte Polyvinylalkohole, welche unter anderem durch Copolymerisation von Vinylester mit silylfunktionellen Comonomeren und anschließender Hydrolyse zugänglich werden.

Ein weiterer Weg ist die Einführung von Silangruppen in das Polymer durch Terminieren der Polymerkette mit Si-Gruppen enthaltenden Thioverbindungen, beispielsweise Mercaptosilanen, wie dies in der US-A 6346570 und in der DE-A 4105601 beschrieben wird; oder Terminierung mittels Michael-Addition von funktionellen Silanen wie aus der US-A 6221994 bekannt. Aus der WO-A 01/09249 ist bekannt, silanfunktionelle Copolymere mittels Copolymerisation mit Vinylsilan und terminieren der Polymerkette mit Mercaptosilan herzustellen. Nachteilig bei der Terminierung von Polymerketten mit Mercaptosilanen ist deren Toxizität und deren Tendenz zur Anlagerung an Doppelbindungen. Weiterhin haben diese Mercaptosilane eine zu starke Tendenz, das Molekulargewicht zu regeln, was sich in einer zu starken Herabsetzung des Molekulargewichts äußert. Darüber hinaus wird häufig die Reaktionsgeschwindigkeit verlangsamt. Weitere Nachteile beim Einsatz von Mercaptosilanen sind deren Tendenz zur Gelbfärbung sowie deren unangenehmer Geruch.

Es bestand folglich die Aufgabe, Silan-haltige Polymerisate zur Verfügung zu stellen, welche die eben genannten Nachteile nicht aufweisen.

Gegenstand der Erfindung sind Silan-haltige Polymerisate erhältlich mittels radikalischer Polymerisation von einem oder mehreren ethylenisch ungesättigten Monomeren in Gegenwart von silanhaltigen Aldehyden oder deren Halbacetale oder Vollacetale.

Geeignete silanhaltige Aldehyde oder deren Halb- bzw. Vollacetale können durch folgende Strukturformeln I bis VI angegeben werden:

I) R₃Si-[OSiR₂]_{Y}-(CH₂)_{X}-CH=O (Aldehyd),

II) R₃Si-[OSiR₂]_{Y}-(CH₂)_{X}-CH(OR¹)₂ (Halb-/Vollacetal),

III) R₃Si-[OSiR₂]_{Y}-(CH₂)z-Ar-(CH₂)z-CH=O (Aldehyd),

IV) R₃Si-[OSiR₂]_{Y}-(CH₂)z-Ar-(CH₂)z-CH(OR¹)₂ (Halb-/Vollacetal),

V) O=CH-(CH₂)ₓ-Si(R)₂-O-Si(R)₂-(CH₂)ₓ-CH=O (Aldehyd-Dimere),

VI) [SiO(R)-(CH₂)_{z}-CH=O]₃₋₄ (cyclische Tri- und Tetramere),

wobei R gleich oder verschieden ist und für Halogen, vorzugsweise Cl oder Br; für einen unverzweigten oder verzweigten, gesättigten oder ungesättigten, gegebenenfalls substituierten Alkyl- oder Alkoxyrest mit 1 bis 12 C-Atomen, vorzugsweise mit 1 bis 3 C-Atomen; für einen Acylrest mit 2 bis 12 C-Atomen, wobei R gegebenenfalls durch Heteroatome aus der Gruppe umfassend N, O, S unterbrochen sein kann; für einen, gegebenenfalls substituierten, Aryl- oder Aryloxyrest mit 3 bis 20 C-Atomen, wobei der Aromat auch ein oder mehrere Heteroatome aus der Gruppe umfassend N, O, S enthalten kann, steht. Bevorzugt kann ein Rest R hydrolysiert werden, um eine freie Silanolgruppe Si-OH zu bilden.

R¹ hat die Bedeutung unverzweigter oder verzweigter, gesättigter oder ungesättigter, gegebenenfalls substituierter Alkylrest mit 1 bis 12 C-Atomen, vorzugsweise 1 bis 3 C-Atome, der gegebenenfalls durch Heteroatome aus der Gruppe umfassend N, O, S unterbrochen sein kann. R¹ kann aber auch für H stehen, wobei ein Halbacetal vorliegt, wenn ein Rest R¹ für H steht, oder ein Aldehyd-Hydrat, wenn beide Reste R¹ für H stehen. Ar steht für eine aromatische Gruppe, vorzugsweise Phenylen, WObei hierzu auch Aromaten gezählt werden, welche ein oder mehrere Heteroatome aus der Gruppe umfassend.N, O, S enthalten. Diese Aromaten können auch unterschiedlich substituiert sein.

x steht für eine Zahl von 2 bis 40, vorzugsweise 2 bis 10. y steht für eine Zahl von 0 bis 100, bevorzugt für eine Zahl von 0 bis 10. z für eine Zahl zwischen 0 und 20, bevorzugt 0 bis 5.

Die silanhaltigen Aldehyde werden in einer Menge von 0.0001 bis 5.0 Gew.-%, bevorzugt 0.01 bis 4.0 Gew.-%, besonders bevorzugt 0.1 bis 3.0 Gew.-%, jeweils bezogen auf das Gesamtgewicht der Monomere, eingesetzt.

Bevorzugte silanhaltige Aldehyde oder deren Halb- bzw. Vollacetale sind die der Strukturformeln I und II, insbesondere diejenigen Aldehyd-Derivate, die durch Hydrosilylierung von Acrolein bzw. dessen Halb- oder Vollacetal erhalten werden können, beispielsweise 3,3-Diethoxypropyltriethoxysilan, 3,3-Dimethoxypropyltriethoxysilan, 3,3-Diethoxypropyltrimethoxysilan, 3,3-Dimethoxypropyltrimethoxysilan, 3,3-Diethoxypropylmethyldiethoxysilan, 3,3-Dimethoxypropyldiisopropoxymethylsilan, 3,3-Diethoxypropyldimethylethoxysilan, 3,3-Dimethoxypropyldiisopropoxymethylsilan, 3,3-Dimethoxypropyltripropoxysilan, 3,3-Dimethoxypropyltriisopropoxysilan, 3,3-Dipropoxypropyltriethoxysilan, 3,3-Diethoxypropylmethyldimethoxysilan, 3,3-Diethoxypropyldimethylmethoxysilan, 3,3-Dimethoxypropylmethyldimethoxysilan, 3,3-Dimethoxypropyldimethylmethoxysilan, 3,3-Dimethoxypropylmethyldiethoxysilan, 3-(Trimethoxysilyl)-propionaldehyd, 3-(Triethoxysilyl)-propionaldehyd, 3-Trimethylsilyl-propionaldehyd, 3-(Methyldiethoxy)silyl-propionaldehyd. Bevorzugt ist auch der 4-(Trimethoxysilyl)-butyraldehyd sowie 1,1'-Diethylformyl-tetramethyldisiloxan (Dimer nach V). Die freien Aldehydgruppen werden bei den Halb- und Vollacetalen durch Hydrolyse im wässrigen Medium freigesetzt.

Als ethylenisch ungesättigte Monomere geeignet sind ein oder mehrere Monomere aus der Gruppe umfassend Vinylester von unverzweigten oder verzweigten Alkylcarbonsäuren mit 1 bis 18 C-Atomen, Acrylsäureester oder Methacrylsäureester von verzweigten oder unverzweigten Alkoholen oder Diolen mit 1 bis 18 C-Atomen, ethylenisch ungesättigte Mono- und Di-Carbonsäuren, deren Salze, sowie deren Amide bzw. N-Methylolamide und Nitrile, ethylenisch ungesättigte Sulfonsäuren sowie deren Salze, ethylenisch ungesättigte heterocyclische Verbindungen, Alkylvinylether, Diene, Olefine, Vinylaromaten und Vinylhalogenide.

Geeignete Vinylester sind solche von Carbonsäuren mit 1 bis 13 C-Atomen. Bevorzugt werden Vinylacetat, Vinylpropionat, Vinylbutyrat, Vinyl-2-ethylhexanoat, Vinyllaurat, 1-Methylvinylacetat, vinylpivalat und Vinylester von α-verzweigten Monocarbonsäuren mit 9 bis 13 C-Atomen, beispielsweise VeoVa9^{R} oder VeoVa10^{R} (Handelsnamen der Firma Shell). Besonders bevorzugt ist Vinylacetat.

Geeignete Monomere aus der Gruppe Acrylsäureester oder Methacrylsäureester sind Ester von unverzweigten oder verzweigten Alkoholen oder Diolen mit 1 bis 15 C-Atomen. Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, t-Butylacrylat, t-Butylmethacrylat, 2-Ethylhexylacrylat, Benzyl(meth)acrylat, 2-Hydroxyethyl(meth)acrylat, Hydroxypropyl-(meth)acrylat, n-Hexyl (meth) acrylat, Isooctyl (meth) acrylat, iso-Decyl(meth)acrylat, Lauryl(meth)acrylat, Methoxyethyl-(meth)acrylat, Phenoxyethyl(meth)acrylat, Isobornyl(meth)acrylat, Stearyl(meth)acrylat, Cyclohexyl(meth)acrylat, α-Chloracrylester, α-Cyanacrylester. Besonders bevorzugt sind Methylacrylat, Methylmethacrylat, n-Butylacrylat, t-Butylacrylat und 2-Ethylhexylacrylat.

Beispiele für geeignete ethylenisch ungesättigte Mono- und Di-Carbonsäuren, deren Salze sowie deren Amide bzw. N-Methylolamide und Nitrile sind Acrylsäure, Methacrylsäure, Fumarsäure, Maleinsäure, Acrylamid, N-Methylolacrylamid, N-Methylolmethacrylamid und Acrylnitril, Methacrylnitril. Beispiele für ethylenisch ungesättigte Sulfonsäuren sind Vinylsulfonsäure und 2-Acrylamido-2-methyl-propansulfonsäure. Geeignete ethylenisch ungesättigte heterocyclische Verbindungen sind Vinylpyrrolidon, Vinylpyridin, N-Vinylimidazol, N-Vinylcaprolactam.

Als Vinylaromaten bevorzugt sind Styrol, α-Methylstyrol und Vinyltoluol. Bevorzugte Vinylhalogenide sind Vinylchlorid, Vinylidenchlorid, Vinylfluorid. Die bevorzugten Olefine sind Ethylen, Propylen und die bevorzugten Diene sind 1,3-Butadien und Isopren.

Bevorzugte Alkylvinylether sind Ethylvinylether, n-Butylvinylether, iso-Butylvinylether, tert-Butylvinylether, Cyclohexylvinylether, Octadecylvinylether, Hydroxybutylvinylether, Cyclohexandimethanolmonovinylether. Weitere geeignete ethylenisch ungesättigte Monomere sind Vinylmethylketon, N-Vinylformamid, N-Vinyl-N-Methylacetamid, Vinylcarbazol, Vinylidencyanid.

Zur Erhöhung des Silanisierungsgrades können zusätzlich noch ethylenisch ungesättigte, silanhaltige Monomere copolymerisiert werden. Geeignete ethylenisch ungesättigte, silanhaltige Monomere sind beispielsweise ethylenisch ungesättigte Siliciumverbindungen der allgemeinen Formel R²SiR³₀₋₂(OR⁴)₁₋₃, wobei R² die Bedeutung CH₂=CR⁵-(CH₂)₀₋₁ oder CH₂=CR⁵CO₂(CH₂)₁₋₃ hat, R³ die Bedeutung C₁- bis C₃-Alkylrest, C₁- bis C₃-Alkoxyrest oder Halogen, vorzugsweise Cl oder Br hat, R⁴ ein unverzweigter oder verzweigter, gegebenenfalls substituierter Alkylrest mit 1 bis 12 C-Atomen, vorzugsweise 1 bis 3 C-Atomen, ist oder ein Acylrest mit 2 bis 12 C-Atomen ist, wobei R⁴ gegebenenfalls durch eine Ethergruppe unterbrochen sein kann, und R⁵ für H oder CH₃ steht. Die ethylenisch ungesättigten, silanhaltigen Monomere werden vorzugsweise in einer Menge von 0.01 bis 10.0 Gew.-%, besonders bevorzugt 0.01 bis 1.0 Gew.-%, jeweils bezogen auf das Gesamtgewicht der Comonomeren, copolymerisiert.

Bevorzugte ethylenisch ungesättigte, silanhaltige Monomere sind γ-Acryl- bzw. γ-Methacryloxypropyltri(alkoxy)silane, α-Methacryloxymethyltri (alkoxy) silane, γ-Methacryloxypropylmethyldi(alkoxy)silane, oder Vinylsilane wie Vinylalkyldi (alkoxy) silane und Vinyltri (alkoxy) silane, wobei als Alkoxygruppen beispielsweise Methoxy-, Ethoxy-, Methoxyethylen, Ethoxyethylen-, Methoxypropylenglykolether- bzw. Ethoxypropylenglykolether-Reste eingesetzt werden können. Beispiele für bevorzugte silanhaltige Monomere sind 3-Methacryloxypropyltrimethoxysilan, 3-Methacryloxypropylmethyldimethoxysilan, Vinyltrimethoxysilan, Vinylmethyldimethoxysilan, Vinyltriethoxysilan, Vinylmethyldiethoxysilan, Vinyltripropoxysilan, Vinyltriisopropoxysilan, Vinyltris-(1-methoxy)-isopropoxysilan, Vinyltributoxysilan, Vinyltriacetoxysilan, Methacryloxymethyltrimethoxysilan, 3-Methacryloxypropyl-tris(2-methoxyethoxy)silan, Vinyltrichorsilan, Vinylmethyldichlorsilan, Vinyltris-(2-methoxyethoxy)silan, Trisacetoxyvinylsilan, Allylvinyltrimethoxysilan, Allyltriacetoxysilan, Vinyldimethylmethoxysilan, vinyldimethylethoxysilan, Vinylmethyldiacetoxysilan, Vinyldimethylacetoxysilan, Vinylisobutyldimethoxysilan, Vinyltriisopropyloxysilan, Vinyltributoxysilan, Vinyltrihexyloxysilan, Vinylmethoxydihexoxysilan, Vinyltrioctyloxysilan, Vinyldimethoxyoctyloxysilan, Vinylmethoxydioctyloxysilan, Vinylmethoxydilauryloxysilan, Vinyldimethoxylauryloxysilan sowie auch Polyethylenglykol-modifizierte Vinylsilane. Als Silane werden am meisten bevorzugt Vinyltrimethoxysilan, Vinylmethyldimethoxysilan, Vinyltriethoxysilan, Vinylmethyldiethoxysilan, Vinyltris-(1-methoxy)-isopropoxysilan, Methacryloxypropyl-tris(2-methoxyethoxy)silan, 3-Methacryloxypropyltrimethoxysilan, 3-Methacryloxypropylmethyldimethoxysilan und Methacryloxymethyltrimethoxysilan sowie deren Gemische.

Geeignete ethylenisch ungesättigte, silanhaltige Monomere sind auch Silan-Gruppen enthaltende (Meth)acrylamide, der allgemeinen Formel CH₂= CR⁶-CO-NR⁷-R⁸-SiR⁹ₙ-(R¹⁰)₃₋ₘ, wobei n= 0 bis 4, m= 0 bis 2, R⁶ entweder H oder eine Methyl-Gruppe ist, R⁷ ist H oder eine Alkyl-Gruppe mit 1 bis 5 C-Atomen ist; R⁸ eine Alky= len-Gruppe mit 1 bis 5 C-Atomen oder eine bivalente organische Gruppe in welcher die Kohlenstoffkette durch ein 0- oder N-Atom unterbrochen wird, ist, R⁹ eine Alkyl-Gruppe mit 1 bis 5 C-Atomen ist, R¹⁰ eine Alkoxy-Gruppe mit 1 bis 40 C-Atomen ist, welche mit weiteren Heterocyclen substituiert sein können. In Monomeren, in denen 2 oder mehrere R⁶ oder R¹⁰- Gruppen vorkommen, können diese identisch oder unterschiedlich sein. Die (Meth)acrylamido-alkylsilane werden auch vorzugsweise in einer Menge von 0.01 bis 10.0 Gew.-%, besonders bevorzugt 0.01 bis 1.0 Gew.-%, jeweils bezogen auf das Gesamtgewicht der Comonomeren, copolymerisiert.

Beispiele für solche (Meth)acrylamido-alkylsilane sind: 3-(Meth)acrylamido-propyltrimethoxysilane, 3-(Meth)acrylamidopropyltriethoxysilane, 3-(Meth)acrylamido-propyltri(β-methoxyethoxy) silane, 2-(Meth)acrylamido-2-methylpropyltrimethoxysilane, 2-(Meth)acrylamido-2-methylethyltrimethoxysilane, N-(2-(Meth)acrylamido-ethyl)aminopropyltrimethoxysilane, 3-(Meth)acrylamido-propyltriacetoxysilane, 2-(Meth)acrylamidoethyltrimethoxysilane, 1- (Meth)acrylamido-methyltrimethoxysilane, 3-(Meth)acrylamido-propylmethyldimethoxysilane, 3-(Meth)acrylamido-propyldimethylmethoxysilane, 3-(N-Methyl(Meth)acrylamido)-propyltrimethoxysilane, 3-((Meth)acrylamidomethoxy)-3-hydroxypropyltrimethoxysilane, 3-((Meth)acrylamidomethoxy)-propyltrimethoxysilane, N,N-Dimethyl-N-trimethoxysilylpropyl-3-(Meth)acrylamido-propylammoniumchlorid und N,N-Dimethyl-N-trimethoxysilylpropyl-2-(Meth)acrylamido-2-methylpropylammoniumchlorid.

Besonders bevorzugt werden Monomere oder Gemische, welche ein oder mehrere Monomere aus der Gruppe Vinylacetat, Vinylester von α-verzweigten Monocarbonsäuren mit 9 bis 11 C-Atomen, Vinylchlorid, Ethylen, Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Styrol enthalten. Am meisten bevorzugt werden Gemische von Vinylacetat mit Ethylen; von Vinylacetat, Ethylen und einem Vinylester von α-verzweigten Monocarbonsäuren mit 9 bis 11 C-Atomen; von n-Butylacrylat mit 2-Ethylhexylacrylat und/oder Methylmethacrylat; von Styrol mit einem oder mehreren Monomeren aus der Gruppe Methylacrylat, Ethylacrylat, Propylacrylat, n-Butylacrylat, 2-Ethylhexylacrylat; von Vinylacetat mit einem oder mehreren Monomeren aus der Gruppe Methylacrylat, Ethylacrylat, Propylacrylat, n-Butylacrylat, 2-Ethylhexylacrylat und gegebenenfalls Ethylen; wobei die genannten Gemische gegebenenfalls noch ein oder mehrere der obengenannten ethylenisch ungesättigten, silanhaltigen Monomere enthalten können.

Die Monomerauswahl bzw. die Auswahl der Gewichtsanteile der Comonomere erfolgt dabei so, dass im allgemeinen eine Glasübergangstemperatur Tg von -50°C bis +120°C, vorzugsweise von -30°C bis +95°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt:
1/Tg = x₁/Tg₁ + x₂/Tg₂ + ... + xₙ/Tgₙ, wobei xₙ für den Massebruch (Gew.-%/100) des Monomeren n steht, und Tgₙ die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Die radikalisch initiierte Polymerisation der ethylenisch ungesättigten Monomeren kann grundsätzlich mit allen hierfür bekannten Polymerisationsverfahren erfolgen, wie Massepolymerisation, Lösungspolymerisation, Fällungspolymerisation, Suspensionspolymerisation in Wasser und Emulsionspolymerisation in Wasser.

Die Polymerisationstemperatur beträgt im allgemeinen 40°C bis 100°C, vorzugsweise 60°C bis 90°C. Bei der Copolymerisation von gasförmigen Comonomeren wie Ethylen, 1,3-Butadien oder Vinylchlorid kann auch unter Druck, im allgemeinen zwischen 2 bar und 100 bar, gearbeitet werden. Die Initiierung der Polymerisation kann mit den gebräuchlichen wasserlöslichen bzw. monomerlöslichen Initiatoren oder Redox-Initiator-Kombinationen erfolgen. Beispiele für wasserlösliche Initiatoren sind die Natrium-, Kalium- und Ammoniumsalze der Peroxodischwefelsäure, Wasserstoffperoxid, t-Butylperoxid, Kaliumperoxodiphosphat, t-Butylperoxopivalat, Cumolhydroperoxid, Isopropylbenzolmonohydroperoxid, Azobisisobutyronitril. Beispiele für monomerlösliche Initiatoren sind Dicetylperoxydicarbonat, Dicyclohexylperoxydicarbonat, Dibenzoylperoxid, t-Butylperneodecanoat, t-Butyl-per-2-ethylhexanoat und t-Butylperpivalat.

Die genannten Initiatoren werden im allgemeinen in einer Menge von 0.01 bis 10.0 Gew.-%, bevorzugt 0.1 bis 0.5 Gew.-%, jeweils bezogen auf das Gesamtgewicht der Monomere, eingesetzt. Als Redox-Initiatoren verwendet man Kombinationen aus den genannten Initiatoren in Kombination mit Reduktionsmitteln. Geeignete Reduktionsmittel sind die Sulfite und Bisulfite der Alkalimetalle und von Ammonium, beispielsweise Natriumsulfit, die Derivate der Sulfoxylsäure wie Zink- oder Alkaliformaldehydsulfoxylate, beispielsweise Natriumhydroxymethansulfinat, und Ascorbinsäure. Die Reduktionsmittelmenge beträgt im allgemeinen 0.01 bis 10.0 Gew.-%, bevorzugt 0.1 bis 0.5 Gew.-%, jeweils bezogen auf das Gesamtgewicht der Monomere.

Bei der Lösungspolymerisation werden organische Lösungsmittel wie zum Beispiel Tetrahydrofuran, Diethylether, Petrolether, Methylacetat, Ethylacetat, Methylethylketon, Aceton, Isopropanol, Propanol, Ethanol, Methanol, Toluol oder Benzol verwendet.

Bei den genannten Verfahren der Suspensions- und Emulsionspolymerisation wird in Gegenwart von oberflächenaktiven Substanzen wie Schutzkolloiden und/oder Emulgatoren polymerisiert. Geeignete Schutzkolloide sind beispielsweise teilverseifte Polyvinylalkohole, Polyvinylpyrrolidone, Polyvinylacetale, Stärken, Cellulosen und deren Carboxymethyl-, Methyl-, Hydroxyethyl-, Hydroxypropyl-Derivate. Geeignete Emulgatoren sind sowohl anionische, kationische als auch nicht-ionische Emulgatoren, beispielsweise anionische Tenside, wie Alkylsulfate mit einer Kettenlänge von 8 bis 18 C-Atomen, Alkyl- oder Alkylarylethersulfate mit 8 bis 18 C-Atomen im hydrophoben Rest und bis zu 60 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen, oder nichtionische Tenside wie Alkylpolyglykolether oder Alkylarylpolyglykolether mit bis zu 60 Ethylenoxid- bzw. Propylenoxid-Einheiten.

Die Monomere können insgesamt vorgelegt werden, insgesamt zudosiert werden oder in Anteilen vorgelegt werden und der Rest nach der Initiierung der Polymerisation zudosiert werden. Die Dosierungen können separat (räumlich und zeitlich) durchgeführt werden oder die zu dosierenden Komponenten können alle oder teilweise voremulgiert dosiert werden.

Die als Regler verwendeten silanhaltigen Aldehyde oder deren Halb- bzw. Vollacetale können insgesamt vorgelegt werden, insgesamt zudosiert werden oder in Anteilen vorgelegt werden und der Rest zudosiert werden. Vorzugsweise wird ein Teil vorgelegt und der Rest zudosiert. Besonders bevorzugt werden Regler und Monomere so zugegeben, dass deren molares Verhältnis gleich bleibt. Mit dieser Maßnahme erhält man eine homogene Molekulargewichtsverteilung.

Neben den als Regler verwendeten silanhaltigen Aldehyde können auch zusätzlich weitere Regler auf Basis von silanhaltigen Verbindungen oder von Aldehyden eingesetzt werden. Beispiele für weitere aldehydische Regler sind:
Trifluoracetaldehyd, Acetaldehyd, Propionaldehyd, Glyoxal, 2,2,2-Trifluorpropionaldehyd, Isobutyraldehyd, Chloracetaldehyd, 2-Chlorpropionaldehyd, Dichloracetaldehyd, Methoxyacetaldehyd, Trichloracetaldehyd, Pentanal, Butylacetaldehyd, Dimethylethylacetaldehyd, Ethoxyacetaldehyd, Methylisopropylacetaldehyd, 2-Bromisobutylaldehyd, 2-Ethylbutyraldehyd, Methyl-n-propylacetaldehyd, n-Propoxyacetaldehyd, Isobutylacetaldehyd, 3-Methoxy-isobutyraldehyd, 3-Chloropropionaldehyd, Caproaldehyd, Ethylisopropylacetaldehyd, Cyclopentylaldehyd, Tetrahydrofurfural, 5-Methylhexanal, Ethylisobutylacetaldehyd, Din-propylacetaldehyd, Hexahydrobenzaldehyd, 2-Ethylhexanal-1,2,2,3-Trichloro-n-butyraldehyd, 3-Fluorobenzaldehyd, 2,2,2-Tribromethanal, 4-Fluorobenzaldehyd, 2-Fluorobenzaldehyd, Benzaldehyd, Glutaraldehyd, Phenylacetaldehyd, Salicylaldehyd, 3-Toloulaldehyd, 2-Toluolaldehyd, 4-Toluolaldehyd, Capraldehyd, 2-Chlorobenzaldehyd, Phenoxyacetaldehyd, 3,5-Dimethylbenzaldehyd, 3-Phenylpropionaldehyd, 2,6-Dimethylbenzaldehyd, 3-Methoxybenzaldehyd, 3-Bromobenzaldehyd, 4-Isopropylbenzaldehyd, 3-Ethoxybenzaldehyd, 4-Methoxybenzaldehyd, 4-Ethoxybenzaldehyd, 3,4-Diethoxybenzaldehyd, Diphenylacetaldehyd, 7-Methyloctanal, Methyl-n-hexylacetaldehyd, 2,3-Dichloro-n-butyraldehyd, n-Octylaldehyd, Pelargonaldehyd, Undecanal, n-Tridecylaldehyd, 2-Hydroxypropionaldehyd, 3-Phenyl-2-methylpropanal, Methyl-n-butylglycol-aldehyd, Phenoxyacetaldehyd, Cyclohexylaldehyd, 2,3,6-Trimethylbenzaldehyd, 3,5-Dimethylhexahydrobenzaldehyd, Methylphenylglycol-aldehyd, 2,4,6-Trimethylbenzaldehyd, Ethylphenylglycol-aldehyd, 2-Hydroxybutanal, 1,2,3,4-Tetrahydro-2-naphthaldehyd, 2-(1-Naphthyl)-propionaldehyd, Adipindialdehyd, Phenylglyoxal, 4-Isopropylbenzaldehyd, 2-Phenoxybenzaldehyd, 1-Naphthaldehyd, 4-Chloron-butyraldehyd, 2,3-Dichloropropionaldehyd, 4-Hydroxybutanal, 2-Isopropyl-3-hydroxypropionaldehyd, 3-Methyl-3-hydroxybutanal, 2-Methyl-4-methoxy-p-butyraldehyd, 2-Phenylpropionaldehyd, 3-Pyridinaldehyd, 3-Chlorobenzaldehyd, 2,3,5,6-Tetramethylbenzaldehyd, 2-Ethoxybenzaldehyd, Tetradecanal, Pentadecanal, Hexadecanal, Phenylacetaldehyd, 4-Methoxy-1-naphthaldehyd, Heptadecanal, 3,4-Methylendioxybenzaldehyd, 2-Iodobenzaldehyd, Stearylaldehyd, 2-Methoxybenzaldehyd, 2-Aminobenzaldehyd, 4-Diethylaminobenzaldehyd, Dodecanal, 2-Nitrobenzaldehyd, 3,4-Dimethoxybenzaldehyd, 4-Chlorobenzaldehyd, Benzylglycolaldehyd, 4-Chloro-2-hydroxybenzaldehyd, Chinolin-4-aldehyd, 2,3-Diphenylpropionaldehyd, 2,3-Dimethoxybenzaldehyd, 9-Hydroxynonanal, 3-Benzyloxybenzaldehyd, Phthalaldehyd, 4-Bromobenzaldehyd, 3-Nitrobenzaldehyd, 2-Phenanthrenaldehyd, 1-Hydroxy-2-Naphthaldehyd, 2-Naphthaldehyd, 4-Phenylbenzaldehyd, 3-Methoxy-4-ethoxybenzaldehyd, 5-Methoxy-1-naphthaldehyd, 2,6-Dichlorobenzaldehyd, Chinolin-2-aldehyd, Chinolin-6-aldehyd, 3,4,5-Trimethoxybenzaldehyd, 4-Iodobenzaldehyd, 3-Phenanthrenaldehyd, 2-Methoxy-1-naphthaldehyd, 2,3,6-Trichlorobenzaldehyd, Isonaphthaldehyd, Hydroxyacetaldehyd, 3-Chloro-n-butylaldehyd, 2,3,4-Tetrachlorobenzaldehyd, Benzaldehyd-2-carbonsäure, und ihre Ester, 3-Hydroxybenzaldehyd, 4-Nitrobenzaldehyd, 3,4-Dihydroxybenzaldehyd, 3,5-Dihydroxybenzaldehyd, 3,5-Dichloro-4-hydroxybenzaldehyd, 3,4,5-Trihydroxybenzaldehyd, Benzaldehyd-4-carbonsäure, 4-Hydroxybenzaldehyd, 2,4,6-Trimethoxybenzaldehyd.

Nach Abschluss der Polymerisation können Restmonomere und flüchtige Komponenten mittels Nachpolymerisation, Destillation, Durchleiten von Inertgas bzw. Wasserdampf oder einer Kombination dieser Massnahmen entfernt werden. Zur Herstellung von in Wasser redispergierbaren Polymerpulvern können die wässrigen Dispersionen, welche mittels Emulsions- und Suspensionspolymerisation zugänglich werden, nach Zusatz von Schutzkolloiden als Verdüsungshilfe, in bekannter Weise sprühgetrocknet werden.

Die Silan-haltigen Polymerisate können in den dafür typischen Anwendungsbereichen eingesetzt werden.

Die mittels Masse-, Lösungs- und Suspensionspolymerisation zugänglichen Festharze und deren Lösungen eignen sich als Trenn- und Beschichtungsmittel. Beispielsweise zur Herstellung von abhäsiven (nicht klebenden) Überzügen im Release-Coating. Sie sind auch geeignet zur Beschichtung von Textil, Papier, Folien, Holz und Metallen, beispielsweise als Schutzbeschichtung oder als Antifouling-Beschichtung. Ein weiteres Anwendungsgebiet ist der Bautenschutz, insbesondere zur Herstellung von witterungsbeständigen Beschichtungen oder Dichtstoffen. Sie sind auch als Modifizierungs- und Hydrophobierungsmittel geeignet und als Additiv für Kosmetika, wie Haarsprays oder Haarfixiermittel. Weitere Anwendungen sind die in Klebstoffen, als Bindemittel in Lacken und Druckfarben, und in vernetzbaren Dichtmitteln (Sealants).

Wässrige Dispersionen oder redispergierbare Dispersionspulver können beispielsweise in bauchemischen Produkten, gegebenenfalls in Verbindung mit hydraulisch abbindenden Bindemitteln wie Zementen (Portland-, Aluminat-, Trass-, Hütten-, Magnesia-, Phosphatzement), Gips, Wasserglas, für die Herstellung von Bauklebern, insbesondere Fliesenkleber und Vollwärmeschutzkleber, Putzen, Spachtelmassen, Fussbodenspachtelmassen, Verlaufsmassen, Dichtschlämmen, Fugenmörtel und Farben eingesetzt werden. Ferner als Bindemittel für Beschichtungsmittel und Klebemittel oder als Beschichtungs- und Bindemittel für Textilien, Fasern, Holz und Papier.

### Beispiel 1:

In einem 2-Liter Rührkessel mit Rückflußkühler, Dosiereinrichtungen, thermostatierbarem Mantel und einem Ankerrührer wurden 427.27 g Methanol, 77.12 g Vinylacetat (VAc), 647.84 mg (2.63 mMol) 1,1'-Di(ethylformyl)-tetramethyldisiloxan und 347.76 mg PPV (t-Butylperpivalat - 75 %-ig in Aliphaten; Halbwertszeit = 1 h bei 74°C) vorgelegt. Der Kessel wurde auf 60°C aufgeheizt. Bei Erreichen von leichtem Rückfluß startete die Initiatordosierung (4.99 g PPV und 46.74 g Methanol). Die erste Stunde wurde die Initiatordosierung mit 6 ml/h dosiert. Nach 1 Stunde Anpolymerisation startete anschließend die Monomerdosierung (390.3 g VAc und 3.28 g (13.32 mMol) 1,1'-Di(ethylformyl)-tetramethyldisiloxan) über eine Zeit von 240 Minuten (Rate: 106 ml/h). Gleichzeitig wurde die Initiatordosierung auf 12 ml/h erhöht. Die Initiatordosierung lief mit dieser Rate 240 Minuten und endete mit der Monomerdosierung. Nach der Initiatordosierung lief der Ansatz noch 120 Minuten auf Temperatur. Nach dieser Nachreaktionszeit wurde der Kessel aufgeheizt zur Destillation, dabei wurde 6 h lang alle 30 Minuten frisches Methanol in den Kessel gegeben, das der abdestillierten Menge entsprach (Entmonomerisierung).

### Festharzanalysen:

Festgehalt (FG): 48.27 % (methanolische Lösung); reines Festharz: Viskosität (Höppler 10 %-ig in Ethylacetat) 2.33 mPas; Säurezahl SZ (Methanol) 8.98 mg KOH/g; Mw (aus GPC, Elutionsmittel THF; Polystyrol-Standards): 31000 g/mol; Mn: 12200 g/mol; Dispersität Mw/Mn: 2.54; Silizium-Gehalt: 0.119 % (alkalischer Aufschluß); Si-Gehalt aus 1 H-NMR: 0.126 %

### Beispiel 2:

Wie Beispiel 1 mit dem Unterschied, dass statt 1,1'-Di-(ethylformyl)-tetramethyldisiloxan 2.075 g (15.95 mMol) 3-Trimethylsilylpropionaldehyd eingesetzt wurde. Davon wurden in der Vorlage 342.34 mg (2.63 mMol) eingesetzt, in der Monomerdosierung befanden sich 1.733 g (13.32 mMol).

### Festharzanalysen:

Festgehalt (FG): 49.32 % (methanolische Lösung); reines Festharz: Viskosität (Höppler 10 %-ig in Ethylacetat) 2.65 mPas; Säurezahl SZ (Methanol) 5.31 mg KOH/g; Mw (aus GPC, Elutionsmittel THF; Polystyrol-Standards): 38000 g/mol; Mn: 14000 g/mol; Dispersität Mw/Mn: 2.71; Silizium-Gehalt: 0.075 % (alkalischer Aufschluß); Si-Gehalt aus 1H-NMR: 0.084 %.

### Beispiel 3:

Wie Beispiel 1 mit dem Unterschied, dass statt 1,1'-Di(ethylformyl)-tetramethyldisiloxan 3.033 g (15.95 mMol) 3-(Methyldiethoxy)silyl-propionaldehyd eingesetzt wurde. Davon wurden in der Vorlage 500.0 mg (2.63 mMol) eingesetzt, in der Monomerdosierung befanden sich 2.533 g (13.32 mMol).

### Festharzanalysen:

Festgehalt (FG): 48.92 % (methanolische Lösung); reines Festharz: Viskosität (Höppler 10 %-ig in Ethylacetat) 2.61 mPas; Säurezahl SZ (Methanol) 6.02 mg KOH/g; Mw (aus GPC, Elutionsmittel THF; Polystyrol-Standards): 37500 g/mol; Mn: 13700 g/mol; Dispersität Mw/Mn: 2.74; Silizium-Gehalt: 0.082 % (alkalischer Aufschluß); Si-Gehalt 1H-NMR: 0.087 %.

### Vergleichsbeispiel 4:

Wie Beispiel 1 mit dem Unterschied, dass statt dem silanhaltigen Aldehyd 1,1'-Di(ethylformyl)-tetramet-hyldisiloxan 3.127 g (15.94 mMol) 3-Mercaptopropyltrimethoxysilan (Wacker GF 70) eingesetzt wurde. Davon wurden in der Vorlage 515.5 mg (2.63 mMol) eingesetzt, in der Monomerdosierung befanden sich 2.612 g (13.31 mMol).

### Festharzanalysen:

Festgehalt (FG): 49.72 % (methanolische Lösung); reines Festharz: Viskosität (Höppler 10 %-ig in Ethylacetat) 2.11 mPas; Säurezahl SZ (Methanol) 10.09 mg KOH/g; Mw (aus GPC, Elutionsmittel THF; Polystyrol-Standards): 26400 g/mol; Mn: 11400 g/mol; Dispersität Mw/Mn: 2.32; Silizium-Gehalt: 0.081 % (alkalischer Aufschluß) .

Auswertung: Hier wurde festgestellt, dass die Polymerisation durch die Anwesenheit eines Mercaptogruppenhaltigen Reglers verzögert wird (zeitlicher Umsatz bei der Polymerisation geringer als bei Beispiel 1, 2 und 3). Ferner wurde bei Verwendung des Mercaptosilans eine leichte Gelbfärbung der Lösung im Zuge der Polymerisation beobachtet.

### Beispiel 5:

In einem 2-Liter Rührkessel mit Rückflußkühler, Dosiereinrichtungen, thermostatierbarem Mantel und einem Ankerrührer wurden 426.87 g Methanol, 77.05 g Vinylacetat (VAc), 459.51 mg (1.87 mMol) 1,1'-Di(ethylformyl)-tetramethyldisiloxan, 315.82 mg Vinyltriethoxysilan (97 %-ig) und 347.44 mg PPV (t-Butylperpivalat - 75 %-ig in Aliphaten; Halbwertszeit = 1 h bei 74°C) vorgelegt. Der Kessel wurde auf 60°C aufgeheizt. Bei Erreichen von leichtem Rückfluß startete die Initiatordosierung (4.98 g PPV und 46.70 g Methanol). Die erste Stunde wurde die Initiatordosierung mit 6 ml/h dosiert. Nach 1 Stunde Anpolymerisation startete anschließend die Monomerdosierung (389.93 g VAc, 1.61 g Vinyltriethoxysilan und 2.345 g (9.53 mMol) 1,1'-Di(ethylformyl)-tetramethyldisiloxan) über eine Zeit von 240 Minuten (Rate: 106 ml/h). Gleichzeitig wurde die Initiatordosierung auf 12 ml/h erhöht. Die Initiatordosierung lief mit dieser Rate 240 Minuten und endete mit der Monomerdosierung. Nach der Initiatordosierung lief der Ansatz noch 120 Minuten auf Temperatur. Nach dieser Nachreaktionszeit wurde der Kessel aufgeheizt zur Destillation, dabei wurde 6 h lang alle 30 Minuten frisches Methanol in den Kessel gegeben, das der abdestillierten Menge entsprach (Entmonomerisierung).

### Festharzanalysen:

Festgehalt (FG): 50.70 % (methanolische Lösung); reines Festharz: Viskosität (Höppler 10 %-ig in Ethylacetat) 2.48 mPas; Säurezahl SZ (Methanol) 6.73 mg KOH/g; Mw (aus GPC, Elutionsmittel THF; Polystyrol-Standards): 36500 g/mol; Mn: 15500 g/mol; Dispersität Mw/Mn: 2.35; Silizium-Gehalt: 0.153 % (alkalischer Aufschluß); Si-Gehalt 1H-NMR: 0.162 %.

### Vergleichsbeispiel 6:

Wie Beispiel 5 mit dem Unterschied, dass statt dem silanhaltigen Aldehyd 1,1'-Di(ethylformyl)-tetramethyldisiloxan 2.238 g (11.41 mMol) 3-Mercaptopropyltrimethoxysilan eingesetzt wurde. Davon wurden in der Vorlage 366.39 mg (1.87 mMol) eingesetzt, in der Monomerdosierung befanden sich 1.872 g (9.54 mMol).

### Festharzanalysen:

Festgehalt (FG): 48.7 % (methanolische Lösung); reines Festharz: Viskosität (Höppler 10 %-ig in Ethylacetat): 2.37 mPas; Säurezahl SZ (Methanol) 10.09 mg KOH/g; Mw (aus GPC, Elutionsmittel THF; Polystyrol-Standards): 32700 g/mol; Mn: 13500 g/mol; Dispersität Mw/Mn: 2.42; Silizium-Gehalt: 0.113 % (alkalischer Aufschluß).

### Auswertung:

Vergleichsbeispiel 6 führt zu niedrigerem Molekulargewicht als Beispiel. 5. Die Mercaptoverbindung ist ein sehr starker Regler. Der Silanaldehyd zeigt mildere Reglerwirkung, obwohl in der Verbindung 2 freie Aldehydgruppen übertragen.

### Beispiel 7:

In einem 2-Liter Rührkessel mit Rückflußkühler, Dosiereinrichtungen, thermostatierbarem Mantel und einem Ankerrührer wurden 424.61 g Methanol, 72.81 g Vinylacetat (VAc), 766.44 mg VeoVa10, 3.10 g Isopropenylacetat (IPAc, 99 %-ig), 766.44 mg (3.11 mMol) 1,1'-Di(ethylformyl)-tetramethyldisiloxan und 345.59 mg PPV (t-Butylperpivalat - 75 %-ig in Aliphaten; Halbwertszeit = 1 h bei 74°C) Vorgelegt. Der Kessel wurde auf 60°C aufgeheizt. Bei Erreichen von leichtem Rückfluß startete die Initiatordosierung (4.95 g PPV und 46.45 g Methanol). Die erste Stunde wurde die Initiatordosierung mit 6 ml/h dosiert. Nach 1 Stunde Anpolymerisation startete anschließend die Monomerdosierung (368.47 g VAc, 3.88 g VeoVa10, 15.67 g IPAc (99 %-ig) und 3.88 g (15.76 mmol) 1,1'-Di(ethylformyl)-tetramethyldisiloxan) über eine Zeit von 240 Minuten (Rate: 106 ml/h). Gleichzeitig wurde die Initiatordosierung auf 12 ml/h erhöht. Die Initiatordosierung lief mit dieser Rate 240 Minuten und endete mit der Monomerdosierung. Nach der Initiatordosierung lief der Ansatz noch 120 Minuten auf Temperatur. Nach dieser Nachreaktionszeit wurde der Kessel aufgeheizt zur Destillation, dabei wurde 6 h lang alle 30 Minuten frisches Methanol in den Kessel gegeben, das der abdestillierten Menge entsprach (Entmonomerisierung).

### Festharzanalysen:

Festgehalt (FG): 47.61 % (methanolische Lösung); reines Festharz: Viskosität (Höppler 10 %-ig in Ethylacetat) 2.26 mPas; Säurezahl SZ (Methanol) 3.93 mg KOH/g; Mw (aus GPC, Elutionsmittel THF; Polystyrol-Standards): 28000 g/mol; Mn: 11500 g/mol; Dispersität Mw/Mn: 2.43; Silizium-Gehalt: 0.155 % (alkalischer Aufschluß); Si-Gehalt aus 1 H-NMR: 0.172 %.

### Vergleichsbeispiel 8 :

Wie Beispiel 7 mit dem Unterschied, dass statt dem silanhaltigen Aldehyd 1,1'-Di(ethylformyl)-tetramethyldisiloxan 3.703 g (18.87 mMol) 3-Mercaptopropyltrimethoxysilan eingesetzt wurde. Davon wurden in der Vorlage 611.59 mg (3.12 mMol) eingesetzt, in der Monomerdosierung befanden sich 3.091 g (15.75 mMol).

### Festharzanalysen:

Festgehalt (FG): 44.58 % (methanolische Lösung); reines Festharz: Viskosität (Höppler 10 %-ig in Ethylacetat) 1.98 mPas; Säurezahl SZ (Methanol) 3.37 mg KOH/g; Mw (aus GPC, Elutionsmittel THF; Polystyrol-Standards): 24300 g/mol; Mn: 9800 g/mol; Dispersität Mw/Mn: 2.48; Silizium-Gehalt: 0.102 % (alkalischer Aufschluß).

### Beispiel 9:

In einem 2-Liter Rührkessel mit Rückflußkühler, Dosiereinrichtungen, thermostatierbarem Mantel und einem Ankerrührer wurden 268.78 g Ethylacetat, 121.83 g Vinylacetat (VAc), 1.22 g (4.15 mMol) 3,3-Diethoxypropyltriethoxysilan und 549.33 mg PPV (t-Butylperpivalat - 75 %-ig in Aliphaten; Halbwertszeit = 1 h bei 74°C) vorgelegt. Der Kessel wurde auf 60°C aufgeheizt. Bei Erreichen von leichtem Rückfluß startete die Initiatordosierung (7.88 g PPV und 51.49 g Ethylacetat). Die erste Stunde wurde die Initiatordosierung mit 5 ml/h dosiert. Nach 1 Stunde Anpolymerisation startete anschließend die Monomerdosierung (616.52 g VAc und 6.17 g (20.98 mMol) 3,3-Diethoxypropyltriethoxysilan) über eine Zeit von 240 Minuten (Rate: 167.4 ml/h). Gleichzeitig wurde die Initiatordosierung auf 10.5 ml/h erhöht. Die Initiatordosierung lief mit dieser Rate 300 Minuten und endete 1 h nach der Monomerdosierung. Nach der Initiatordosierung lief der Ansatz noch 120 Minuten auf Temperatur. Nach dieser Nachreaktionszeit wurde der Kessel aufgeheizt zur Destillation, dabei wurde 6 h lang alle 30 Minuten frisches Methanol in den Kessel gegeben, das der abdestillierten Menge entsprach (Entmonomerisierung).

### Festharzanalysen:

Festgehalt (FG): 61.90 % (methanolische Lösung); reines Festharz: Viskosität (Höppler 10 %-ig in Ethylacetat) 11.11 mPas; Säurezahl SZ (Methanol) 5.61 mg KOH/g; Mw (aus GPC, Elutionsmittel THF; Polystyrol-Standards): 188600 g/mol; Mn: 43500 g/mol; Dispersität Mw/Mn: 4.33; Silizium-Gehalt: 0.084 % (alkalischer Aufschluß).

### Vergleichsbeispiel 10:

Wie Beispiel 9 mit dem Unterschied, dass statt dem Vollacetal des silanhaltigen Aldehyds 3,3-Diethoxypropyltriethoxysilan 4.943 g (25.19 mMol) 3-Mercaptopropyltrimethoxysilan eingesetzt wurde. Davon wurden in der Vorlage 814.57 mg (4.15 mMol) eingesetzt, in der Monomerdosierung befanden sich 4.128 g (21.04 mMol).

### Festharzanalysen:

Festgehalt (FG) : 62.02 % (methanolische Lösung); reines Festharz: Viskosität (Höppler 10 %-ig in Ethylacetat) 4.42 mPas; Säurezahl SZ (Methanol) 5.05 mg KOH/g; Mw (aus GPC, Elutionsmittel THF; Polystyrol-Standards): 69000 g/mol; Mn: 26500 g/mol; Dispersität Mw/Mn: 2.60; Silizium-Gehalt: 0.076 % (alkalischer Aufschluß).

| Tabellarische Zusammenfassung: | | | | | | |
|---|---|---|---|---|---|---|
| Bsp. | Reglertyp, (Menge mMol) | Übertragung (%)¹⁾ | Mw | Mn | Dispersität | Si-Gehalt (%)²⁾ |
| 1 | V (15.95) | 70 | 31000 | 12200 | 2.54 | 0.119 |
| 2 | I (15.95) | 94 | 38000 | 14000 | 2.71 | 0.075 |
| 3 | I (15.95) | 96 | 37500 | 13700 | 2.74 | 0.082 |
| V4 | SH-Silan (15.95) | 100 | 26400 | 11400 | 2.32 | 0.081 |
| 5 | V (11.40) | 86 | 36500 | 15500 | 2.35 | 0.153 |
| V6 | SH-Silan (11.41) | 100 | 32700 | 13500 | 2.42 | 0.113 |
| 7 | V(18.87) | 91 | 28000 | 11500 | 2.43 | 0.155 |
| V8 | SH-Silan(18.87) | 100 | 24300 | 9800 | 2.48 | 0.102 |
| 9 | II (25.13) | 20 | 188600 | 43500 | 4.33 | 0.084 |
| V10 | SH-Silan (25.19) | 100 | 69000 | 26500 | 2.60 | 0.076 |

| | | | | | | |
|---|---|---|---|---|---|---|
| 1) Die Übertragung des Reglers wurde mit Hilfe der 1H-NMR-Spektroskopie ermittelt. | | | | | | |
| 2) Der Silizium-Gehalt wurde durch alkalischen Aufschluß ermittelt. | | | | | | |

## Patentansprüche

1. Silan-haltige Polymerisate erhältlich mittels radikalischer Polymerisation von einem oder mehreren ethylenisch ungesättigten Monomeren in Gegenwart von silanhaltigen Aldehyden oder deren Halbacetale oder Vollacetale.

2. Silan-haltige Polymerisate gemäß Anspruch 1, wobei die silanhaltigen Aldehyden, deren Halbacetale und Vollacetale ausgewählt werden aus der Gruppe umfassend Verbindungen der Strukturformeln
I) R₃Si-[OSiR₂]_{Y}-(CH₂)_{X}-CH=O,
II) R₃Si-[OSiR₂]_{Y}-(CH₂)_{X}-CH(ORⁱ)₂,
III) R₃Si-[OSiR₂]_{Y}-(CH₂)z-Ar-(CH₂)z-CH=O,
IV) R₃Si-[OSiR₂]_{Y}-(CH₂)z-Ar-(CH₂)z-CH(OR¹)₂,
V) O=CH-(CH₂)ₓ-Si(R)₂-O-Si(R)₂-(CH₂)ₓ-CH=O,
VI) [SiO(R)-(CH₂)_{z}-CH=O]₃₋₄,
wobei R gleich oder verschieden ist und für Halogen; für einen unverzweigten oder verzweigten, gesättigten oder ungesättigten, gegebenenfalls substituierten Alkyl- oder Alkoxyrest mit 1 bis 12 C-Atomen; für einen Acylrest mit 2 bis 12 C-Atomen, wobei R gegebenenfalls durch Heteroatome aus der Gruppe umfassend N, O, S unterbrochen sein kann; für einen, gegebenenfalls substituierten, Aryl- oder Aryloxyrest mit 3 bis 20 C-Atomen, wobei der Aromat auch ein oder mehrere Heteroatome aus der Gruppe umfassend N, O, S enthalten kann, steht, und
R¹ die Bedeutung hat H, unverzweigter oder verzweigter, gesättigter oder ungesättigter, gegebenenfalls substituierter Alkylrest mit 1 bis 12 C-Atomen, der gegebenenfalls durch Heteroatome aus der Gruppe umfassend N, O, S unterbrochen sein kann, Ar für eine aromatische Gruppe steht, welche gegebenenfalls ein oder mehrere Heteroatome aus der Gruppe umfassend N, O, S enthalten, und
x = 2 bis 40, y = 0 bis 100, z = 0 bis 20.

3. Silan-haltige Polymerisate nach Anspruch 1 bis 2, **dadurch gekennzeichnet, dass** die silanhaltigen Aldehyde in einer Menge von 0.0001 bis 5.0 Gew.-%, bezogen auf das Gesamtgewicht der Monomere, eingesetzt werden.

4. Silan-haltige Polymerisate nach Anspruch 1 bis 3, **dadurch gekennzeichnet, dass** die ethylenisch ungesättigten Monomere ein oder mehrere Monomere sind aus der Gruppe umfassend Vinylester von unverzweigten oder verzweigten Alkylcarbonsäuren mit 1 bis 18 C-Atomen, Acrylsäureester oder Methacrylsäureester von verzweigten oder unverzweigten Alkoholen oder Diolen mit 1 bis 18 C-Atomen, ethylenisch ungesättigte Mono- und Di-Carbonsäuren sowie deren Amide bzw. N-Methylolamide und Nitrile, ethylenisch ungesättigte Sulfonsäuren, ethylenisch ungesättigte heterocyclische Verbindungen, Alkylvinylether, Diene, Olefine, Vinylaromaten und Vinylhalogenide.

5. Silan-haltige Polymerisate nach Anspruch 1 bis 4, **dadurch gekennzeichnet, dass** ethylenisch ungesättigte, silanhaltige Monomere copolymerisiert werden.

6. Verfahren zur Herstellung von Silan-haltige Polymerisate nach Anspruch 1 bis 5, mittels radikalischer Polymerisation von einem oder mehreren ethylenisch ungesättigten Monomeren in Gegenwart von silanhaltigen Aldehyden oder deren Halbacetale oder Vollacetale.

7. Verfahren nach Anspruch 6, **dadurch gekennzeichnet, dass** die Polymerisation mittels Masse-, Lösungs-, Suspensions- oder Emulsionspolymerisation erfolgt.

8. Verfahren nach Anspruch 6 oder 7, **dadurch gekennzeichnet, dass** die silanhaltigen Aldehyde oder deren Halb- bzw. Vollacetale in Anteilen vorgelegt werden und der Rest zudosiert wird.

9. Verfahren nach Anspruch 6 bis 8, **dadurch gekennzeichnet, dass** neben den silanhaltigen Aldehyde zusätzlich weitere Regler auf Basis von silanhaltigen Verbindungen oder Aldehyden eingesetzt werden.

10. Verwendung der Silan-haltigen Polymerisate nach Anspruch 1 bis 5 als Trenn- und Beschichtungsmittel.

11. Verwendung der Silan-haltigen Polymerisate nach Anspruch 1 bis 5 als Bautenschutzmittel.

12. Verwendung der Silan-haltigen Polymerisate nach Anspruch 1 bis 5 als Modifizierungs- und Hydrophobierungsmittel.

13. Verwendung der Silan-haltigen Polymerisate nach Anspruch 1 bis 5 als Additiv in Kosmetika.

14. Verwendung der Silan-haltigen Polymerisate nach Anspruch 1 bis 5 als Bindemittel in Klebstoffen, Lacken, Druckfarben oder Dichtmittel.

15. Verwendung der Silan-haltigen Polymerisate nach Anspruch 1 bis 5 in bauchernischen Produkten, gegebenenfalls in Verbindung mit hydraulisch abbindenden Bindemitteln wie Zementen, Gips, Wasserglas, für die Herstellung von Bauklebern, Putzen, Spachtelmassen, Fussbodenspachtelmassen, Verlaufsmassen, Dichtschlämmen, Fugenmörtel und Farben.

16. Verwendung der Silan-haltigen Polymerisate nach Anspruch 1 bis 5 als Bindemittel für Beschichtungsmittel und Klebemittel oder als Beschichtungs- und Bindemittel für Textilien, Fasern, Holz und Papier.

## Claims

1. Silane-containing polymers obtainable by free-radical addition polymerization of one or more ethylenically unsaturated monomers in the presence of silane-containing aldehydes or their hemiacetals or full acetals.

2. Silane-containing polymers according to Claim 1, where the silane-containing aldehydes, their hemiacetals and full acetals are selected from the group consisting of compounds of the structural formulae
I) R₃Si-[OSiR₂]_{Y}-(CH₂)_{X}-CH=O,
II) R₃Si-[OSiR₂]_{Y}-(CH₂)_{X}-CH(OR¹)₂,
III) R₃Si-[OSiR₂]_{Y}-(CH₂)z-Ar-(CH₂)z-CH=0,
IV) R₃Si-[OSiR₂]_{Y}-(CH₂)z-Ar-(CH₂)z-CH(OR¹)₂,
V) O=CH-(CH₂)ₓ-Si(R)₂-O-Si(R)₂-(CH₂)ₓ-CH=O,
VI) [SiO(R)-(CH₂)_{z}-CH=O]₃₋₄),
where R is identical or different at each occurrence and is halogen; is an unbranched or branched, saturated or unsaturated, optionally substituted alkyl or alkoxy radical having 1 to 12 carbon atoms; is an acyl radical having 2 to 12 carbon atoms, it being possible for R if desired to be interrupted by heteroatoms from the group consisting of N, O and S; or is an optionally substituted aryl or aryloxy radical having 3 to 20 carbon atoms, it also being possible for the aromatic to contain one or more heteroatoms from the group consisting of N, O and S, and
R¹ has the definition H, unbranched or branched, saturated or unsaturated, optionally substituted alkyl radical having 1 to 12 carbon atoms, which may be interrupted if desired by heteroatoms from the group consisting of N, O and S, Ar is an aromatic group, which if desired contains one or more heteroatoms from the group consisting of N, O and S, and
x = 2 to 40, y = 0 to 100, z = 0 to 20.

3. Silane-containing polymers according to Claim 1 or 2, **characterized in that** the silane-containing aldehydes are used in an amount of from 0.0001 to 5.0% by weight, based on the total weight of the monomers.

4. Silane-containing polymers according to any of Claims 1 to 3, **characterized in that** the ethylenically unsaturated monomers are one or more monomers from the group consisting of vinyl esters of unbranched or branched alkylcarboxylic acids having 1 to 18 carbon atoms, acrylic esters or methacrylic esters of branched or unbranched alcohols or diols having 1 to 18 carbon atoms, ethylenically unsaturated monocarboxylic and dicarboxylic acids and also their amides or N-methylolamides and nitriles, ethylenically unsaturated sulphonic acids, ethylenically unsaturated heterocyclic compounds, alkyl vinyl ethers, dienes, olefins, vinylaromatics and vinyl halides.

5. Silane-containing polymers according to any of Claims 1 to 4, **characterized in that** ethylenically unsaturated, silane-containing monomers are copolymerized.

6. Processes for preparing silane-containing polymers according to any of Claims 1 to 5 by free-radical addition polymerization of one or more ethylenically unsaturated monomers in the presence of silane-containing aldehydes or their hemiacetals or full acetals.

7. Processes according to Claim 6, **characterized in that** the polymerization takes place by bulk, solution, suspension or emulsion polymerization.

8. Processes according to Claim 6 or 7, **characterized in that** the silane-containing aldehydes or their hemiacetals and/or full acetals are included in fractions in the initial charge and the remainder is metered in.

9. Processes according to any of Claims 6 to 8, **characterized in that** besides the silane-containing aldehydes further regulators based on silane-containing compounds or aldehydes are also used.

10. Use of the silane-containing polymers according to any of Claims 1 to 5 as a release agent or coating material.

11. Use of the silane-containing polymers according to any of Claims 1 to 5 as an architectural preservative.

12. Use of the silane-containing polymers according to any of claims 1 to 5 as a modifier or water repellent.

13. Use of the silane-containing polymers according to any of Claims 1 to 5 as an additive in cosmetics.

14. Use of the silane-containing polymers according to any of Claims 1 to 5 as a binder in adhesives, paints, printing inks or sealants.

15. Use of the silane-containing polymers according to any of Claims 1 to 5 in chemical products for the construction industry, alone or in conjunction with hydraulically setting binders such as cements, gypsum, waterglass, for producing construction adhesives, renders, filling compounds, trowel-applied flooring compounds, levelling compounds, non-shrink grouts, jointing mortars and paints.

16. Use of the silane-containing polymers according to any of Claims 1 to 5 as a binder for coating materials and adhesives or as coating material or binder for textiles, fibres, wood or paper.

## Revendications

1. Polymères silanés pouvant être obtenus par polymérisation radicalaire d'un ou plusieurs monomères à insaturation éthylénique en présence d'aldéhydes silanés ou de leurs hémi-acétals ou holo-acétals.

2. Polymères silanés selon la revendication 1, dans lesquels les aldéhydes silanés, leurs hémi-acétals et holo-acétals sont choisis dans le groupe comprenant des composés de formules développées
I) R₃Si-[OSiR₂]_{y}-(CH₂)ₓ-CH=O,
II) R₃Si-[OSiR₂]_{y}-(CH₂)ₓ-CH(OR¹)₂,
III) R₃Si-[OSiR₂]_{y}-(CH₂)_{z}-Ar-(CH₂)_{z}-CH=O,
IV) R₃Si-[OSiR₂]_{y}-(CH₂)_{z}-Ar-(CH₂)_{z}-CH(OR¹)₂,
V) O=CH-(CH₂)ₓ-Si(R)₂-O-Si(R)₂-(CH₂)ₓ-CH=O,
VI) [SiO(R)-(CH₂)_{z}-CH=O]₃₋₄,
R étant identique ou différent et représentant un atome d'halogène ; un radical alkyle ou alcoxy ramifié ou non ramifié, saturé ou insaturé, éventuellement substitué, ayant de 1 à 12 atomes de carbone ; un radical acyle ayant de 2 à 12 atomes de carbone, R pouvant éventuellement être interrompu par des hétéroatomes choisis dans l'ensemble comprenant N, O, S ; un radical aryle ou aryloxy éventuellement substitué ayant de 3 à 20 atomes de carbone, le radical aromatique pouvant également contenir un ou plusieurs hétéroatomes choisis dans l'ensemble comprenant N, O, S, et
R¹ représentant H, un radical alkyle ramifié ou non ramifié, saturé ou insaturé, éventuellement substitué, ayant de 1 à 12 atomes de carbone, qui peut éventuellement être interrompu par des hétéroatomes choisis dans l'ensemble comprenant N, O, S ;
Ar représentant un groupe aromatique qui peut éventuellement contenir un ou plusieurs hétéroatomes choisis dans l'ensemble comprenant N, O, S, et
x = 2 à 40, y = 0 à 100, z = 0 à 20.

3. Polymères silanés selon la revendication 1 ou 2, **caractérisés en ce que** les aldéhydes silanés sont utilisés en une quantité de 0,0001 à 5,0 % en poids, par rapport au poids total des monomères.

4. Polymères silanés selon l'une quelconque des revendications 1 à 3, **caractérisés en ce que** les monomères à insaturation éthylénique consistent en un ou plusieurs monomères choisis dans l'ensemble comprenant des esters vinyliques d'acides alkylcarboxyliques ramifiés ou non ramifiés ayant de 1 à 18 atomes de carbone, des esters d'acide acrylique ou des esters d'acide méthacrylique avec des alcools ou diols ramifiés ou non ramifiés ayant de 1 à 18 atomes de carbone, des acides mono- et dicarboxyliques à insaturation éthylénique ainsi que leurs amides ou N-méthylolamides et nitriles, des acides sulfoniques à insaturation éthylénique, des composés hétérocycliques à insaturation éthylénique, des éthers alkylvinyliques, des diènes, des oléfines, des composés vinylaromatiques et des halogénures de vinyle.

5. Polymères silanés selon l'une quelconque des revendications 1 à 4, **caractérisés en ce que** des monomères silanés à insaturation éthylénique sont copolymérisés.

6. Procédé pour la préparation de polymères silanés selon l'une quelconque des revendications 1 à 5, par polymérisation radicalaire d'un ou plusieurs monomères à insaturation éthylénique, en présence d'aldéhydes silanés ou de leurs hémi-acétals ou holo-acétals.

7. Procédé selon la revendication 6, **caractérisé en ce que** la polymérisation est effectuée par polymérisation en masse, en solution, en suspension ou en émulsion.

8. Procédé selon la revendication 6 ou 7, **caractérisé en ce que** les aldéhydes silanés ou leurs hémi- ou holo-acétals sont en parties disposés au préalable et le reste est ajouté par addition dosée.

9. Procédé selon l'une quelconque des revendications 6 à 8, **caractérisé en ce qu'**en plus des aldéhydes silanés on utilise additionnellement d'autres régulateurs à base de composés silanés ou d'aldéhydes.

10. Utilisation des polymères silanés selon l'une quelconque des revendications 1 à 5, en tant qu'agent de revêtement et de séparation.

11. Utilisation des polymères silanés selon l'une quelconque des revendications 1 à 5, en tant qu'agent de protection de bâtiments.

12. Utilisation des polymères silanés selon l'une quelconque des revendications 1 à 5, en tant qu'agent d'hydrophobie et de modification.

13. Utilisation des polymères silanés selon l'une quelconque des revendications 1 à 5, en tant qu'additif dans des cosmétiques.

14. Utilisation des polymères silanés selon l'une quelconque des revendications 1 à 5, en tant que liant dans des adhésifs, des peintures, des encres d'imprimerie ou des produits d'étanchéité.

15. Utilisation des polymères silanés selon l'une quelconque des revendications 1 à 5 dans des produits chimiques pour le bâtiment, éventuellement en association avec des liants à prise hydraulique, tels que le ciment, le plâtre, le verre soluble, pour la fabrication de colles pour le bâtiment, d'enduits, de mastics, de mastics pour sols, de matières de nivelage, de produits d'étanchéité, de mortiers pour joints et de peintures.

16. Utilisation des polymères silanés selon l'une quelconque des revendications 1 à 5, en tant que liants pour des compositions de revêtement et des adhésifs ou en tant que compositions de revêtement et liants pour textiles, fibres, bois et papier.
